Europäisches Patentamt

European Patent Office

Office européen des brevets

(19)

(11) **EP 1 483 634 B1**

(12) **EUROPÄISCHE PATENTSCHRIFT**

(45) Veröffentlichungstag und Bekanntmachung des Hinweises auf die Patenterteilung:
**26.07.2006 Patentblatt 2006/30**

(21) Anmeldenummer: **03743818.1**

(22) Anmeldetag: **24.02.2003**

(51) Int Cl.:
**G05B 17/02** *(2006.01)*

(86) Internationale Anmeldenummer:
**PCT/EP2003/001863**

(87) Internationale Veröffentlichungsnummer:
**WO 2003/077044 (18.09.2003 Gazette 2003/38)**

(54) **VERFAHREN ZUR SIMULATION EINES TECHNISCHEN SYSTEMS UND SIMULATOR**

METHOD FOR SIMULATING A TECHNICAL SYSTEM AND SIMULATOR

PROCEDE DE SIMULATION D'UN SYSTEME TECHNIQUE ET SIMULATEUR ASSOCIE

(84) Benannte Vertragsstaaten:
**AT BE BG CH CY CZ DE DK EE ES FI FR GB GR HU IE IT LI LU MC NL PT SE SI SK TR**

(30) Priorität: **08.03.2002 EP 02005439**

(43) Veröffentlichungstag der Anmeldung:
**08.12.2004 Patentblatt 2004/50**

(73) Patentinhaber: **SIEMENS AKTIENGESELLSCHAFT**
**80333 München (DE)**

(72) Erfinder: **HILLERMEIER, Claus**
**83236 Übersee (DE)**

(56) Entgegenhaltungen:
**US-A- 5 808 915       US-A- 6 154 716**

• RIZZOLI V ET AL: "HARMONIC-BALANCE SIMULATION OF STRONGLY NONLINEAR VERY LARGE-SIZE MICROWAVE CIRCUITS BY INEXACT NEWTON METHODS" 1996 IEEE MTT-S INTERNATIONAL MICROWAVE SYMPOSIUM DIGEST. SAN FRANCISCO, JUNE 17 - 21, 1996, IEEE MTT-S INTERNATIONAL MICROWAVE SYMPOSIUM DIGEST, NEW YORK, IEEE, US, Bd. 3, 17. Juni 1996 (1996-06-17), Seiten 1357-1360, XP000720599 ISBN: 0-7803-3247-4

**Beschreibung**

Die Erfindung betrifft ein Verfahren sowie einen Simulator zur Simulation eines technischen Systems, insbesondere einer Kraftwerksanlage.

In vielen Anwendungsfällen ist es wünschenswert, ein mathematisches Abbild eines technischen Systems zur Verfügung zu haben, um beispielsweise die unter Realbedingungen zu erwartenden Betriebszustände des technischen Systems voraussagen zu können. So ist es z.B. möglich, einen Regler für das technische System zu entwerfen und zu testen, ohne dabei schon während der Entwurfsphase einen Eingriff in ein reales technisches System vornehmen zu müssen, was zu einer Beeinträchtigung und/oder zu einer Gefährdung während des realen Betriebs führen könnte.

Des Weiteren können mittels eines Simulators Betriebszustände des technischen Systems simuliert werden, beispielsweise gefährliche Betriebszustände, welche in dem realen technischen System nur mit hohem Aufwand oder sogar unter Eingehung eines Risikos erzeugbar sind. Besonders vorteilhaft können Simulatoren von technischen Systemen eingesetzt werden, um das für die Bedienung des technischen Systems vorgesehene Betriebspersonal in allen zu erwartenden Betriebsarten vorab zu schulen, so dass das Betriebspersonal das Bedienen des technischen Systems nicht erst während des realen Betriebs erlernen muss.

Zur Realisierung eines Simulators auf einem Rechner ist es notwendig, das technische System mathematisch zu beschreiben.

Die meisten technischen Systeme lassen sich durch eine im Allgemeinen nicht-lineare Differenzialgleichung höherer Ordnung beschreiben.

Um das zeitliche Verhalten des technischen Systems auf einem Rechner simulieren zu können, muss diese Differenzialgleichung höherer Ordnung gelöst werden. Viele bekannten Simulatoren und Simulationsprogramme verwenden zur Lösung dieser höher dimensionalen Differenzialgleichung die dazu äquivalente sogenannte Zustandsraumbeschreibung.

Dabei ist die höher dimensionale Differenzialgleichung beispielsweise n-ten Grades überführt in n Differenzialgleichungen ersten Grades. Die Äquivalenz zwischen der n-dimensionalen Differenzialgleichungen und den n Differenzialgleichungen erster Ordnung ist als Zustandsraumbeschreibung, insbesondere in der regelungstechnischen Literatur, hinreichend bekannt.

Eine derartige Zustandsraumbeschreibung umfasst beispielsweise folgende Zustandsgleichung

$$x' = f(x,t),$$

dabei bezeichnet x den sogenannten Zustandsvektor, t die Zeit und x' die zeitliche Ableitung des Zustandsvektors x. Die Funktion f beschreibt dabei die Systemdynamik und kann im Allgemeinen auch nicht-linear sein. Wenn es sich bei dem technischen System um ein sogenanntes zeitinvariantes System handelt, sich die Systemeigenschaften über die Zeit also nicht verändern, so weisen die das System beschreibenden Differenzialgleichungen konstante Koeffizienten auf.

Falls die Eigenwerte des technischen Systems betragsmäßig sehr weit voneinander entfernt liegen, so spricht man von "steifen" Differenzialgleichungen, welche das System beschreiben. Derartige, betragsmäßig sehr unterschiedliche Eigenwerte des Systems, welche sich beispielsweise um Zehnerpotenzen unterscheiden, beschreiben mathematisch so genannte Eigenschwingungen des Systems, welche untereinander stark unterschiedliche Frequenzen aufweisen. Dies bedeutet, dass in diesem Falle innerhalb des Systems dynamische Vorgänge auf verschiedenen Zeitachsen ablaufen, beispielsweise Vorgänge mit niedriger Eigenfrequenz auf einer Makro-Zeitachse, welchen Vorgänge mit hoher Eigenfrequenz auf einer Mikro-Zeitachse überlagert sind.

Besonders die Lösung derartiger "steifer" Differenzialgleichungssysteme (also Systeme mit Eigenschwingungen stark unterschiedlicher Frequenz) erfordert die Anwendung von besonders stabilen numerischen Lösungsalgorithmen.

Es sind eine Reihe von numerischen Lösungsalgorithmen bekannt, wie z.B. die semi-implizite Euler-Methode oder die Rosenbrock-Methode. Diese genannten Lösungsalgorithmen repräsentieren besonders stabile numerische Integrationsverfahren, insbesondere zur Lösung der genannten "steifen" Differentialgleichungssysteme.

Praktisch alle bekannten numerischen Lösungsalgorithmen berechnen bei der Lösung der Differenzialgleichungen die sogenannte Jacobimatrix der Funktion f, wobei die Jacobimatrix die partiellen Ableitungen jeder Vektorkomponente von f jeweils nach allen Komponenten des Zustandvektors x beinhaltet.

Die Berechnung der Jacobimatrix bei jedem Simulationsschritt führt insbesondere bei hochdimensionalen technischen Systemen zu langen Rechenzeiten, da die partiellen Ableitungen mittels Differenzquotienten in mehreren Schritten approximiert werden müssen.

Das Dokument US 5 808 915 beschreibt ein Verfahren zur Reduzierung des Speicherbedarfs bei der Simulation von Schaltkreisen, bei dem die Berechnung und Speicherung der Werte der Jakobimatrix durch einen iterativ aktualisierten Schätzwert vereinfacht wird.

In dem bekannten Software-Programmpaket Matlab/Simulink werden technische Systeme beispielsweise mittels dynamischer Diagramme modelliert. Derartige Diagramme umfassen Integrierer, Summierer, Multiplizierer und Funktionsblöcke (= Abbildungsvorschriften basierend z.B. auf mathematischen Operationen zur Berechnung von Ausgangssignalen aus an dem Funktionsblock anliegenden Eingangssignalen).

Die numerische Differentiation zur Bestimmung der Jakobimatrix erfordert es, zur Berechnung eines die Differentiation approximierenden Differenzquotienten in einem Simulationsschritt nacheinander jeweils eine Komponente des Zustandsvektors um einen Betrag $\Delta$ zu variieren, dabei die jeweils anderen Komponenten des Zustandsvektors festzuhalten und das dynamische Diagramm erneut zu durchlaufen. Dies bedeutet z.B. bei einem System der Ordnung 100, dessen dynamisches Diagramm folglich 100 Integrierer umfasst, dass dieses dynamische Diagramm während eines Simulationsschritts 100mal erneut durchlaufen werden muss, wobei bei jedem erneuten Durchlauf jeweils eine andere Komponente des Zustandsvektors um einen Betrag $\Delta$ variiert wird, so dass die zur Lösung des Differentialgleichungssystems benötigte Jakobimatrix mittels der derart ermittelten Differenzquotienten approximiert wird.

Dies erfordert in jedem Simulationsschritt einen gewaltigen Bedarf an Rechenzeit.

Zusammenfassend lässt sich also sagen, dass herkömmliche Simulatoren, welche zur Lösung der Zustandsbeschreibung eines technischen Systems einen numerischen Algorithmus verwenden, die dabei in der Regel stattfindende Ermittlung der Jakobimatrix durch die Bildung von Differenzenquotienten bewerkstelligen. Derartige numerische Algorithmen erfordern zur Bestimmung der genannten Differenzenquotienten in jedem Simulationsschritt eine Reihe von Durchläufen durch das das technische System beschreibende dynamische Diagramm, wobei in jedem dieser Durchläufe jeweils eine der Zustandsgrößen leicht variiert wird und die anderen Zustandsgrößen festgehalten werden. Daraus ergibt sich, dass die Berechnung der Jakobimatrix sehr aufwendig ist.

Der Erfindung liegt daher die Aufgabe zugrunde, ein Verfahren und einen Simulator zur Simulation eines technischen Systems anzugeben, wobei das technische System beschrieben ist durch eine Zustandsbeschreibung, welche Zustandsgrößen des technischen Systems umfasst, welche im Hinblick auf die benötigte Rechenzeit besonders effektiv sind und eine hohe Genauigkeit der berechneten Lösungen aufweisen.

Bezüglich des Verfahrens wird die Aufgabe gelöst durch ein Verfahren zur Simulation eines technischen Systems in einer Anzahl von Simulationsschritten, wobei das technische System beschrieben ist durch eine Zustandsbeschreibung, welche Zustandsgrößen des technischen Systems umfasst, wobei die Zustandsbeschreibung als ein Verknüpfungselemente umfassendes dynamisches Diagramm dargestellt wird, welches mindestens einen Summierer und/ oder einen Multiplizierer und/oder mindestens einen Funktionsblock und/oder mindestens einen Integrator umfasst und wobei die Verknüpfungselemente jeweils mindestens einen zugehörigen Signalein- und Signalausgang umfassen, und wobei zur Lösung der Zustandsbeschreibung die Jakobimatrix der Zustandsbeschreibung verwendet wird, mit folgenden Schritten:

1. Die Anzahl der Signalein- und Signalausgänge jedes Verknüpfungselements wird für jeden Signalein- bzw. Signalausgang um eine Anzahl erweitert, welche der Anzahl der Zustandsgrößen des technischen Systems entspricht, so dass mittels der erweiterten Signalein- und Signalausgänge die partiellen Ableitungen von an den Signalein- und Signalausgängen anliegenden Signalen nach den einzelnen Zustandsgrößen zusätzlich erfassbar sind.

2. In einem ersten Simulationsschritt werden die erweiterten Signalausgänge der vorhandenen Integratoren jeweils initialisiert, indem bei jedem Integrator, welcher jeweils zur Bestimmung einer Zustandsgröße vorgesehen und dieser Zustandsgröße zugeordnet ist, in dessen erweiterten Signalausgängen an einer Signalposition, welche der dem Integrator zugeordneten Zustandsgröße entspricht, ein Initialisierungswert vorgegeben wird.

3. In folgenden Simulationsschritten wird jeweils die Jakobimatrix durch die an den erweiterten Signaleingängen der Integratoren anliegenden Signale bestimmt, wobei die aktuellen Werte der erweiterten Signaleingänge eines Integrators den aktuellen Werten einer Zeile der Jakobimatrix entsprechen, so dass die Gesamtheit der aktuellen Werte der an den erweiterten Signaleingängen aller Integratoren anliegenden Signale die Jakobimatrix umfassen.

Die Erfindung geht dabei von der Erkenntnis aus, dass technische Systeme mittels verschalteter Verknüpfungselemente, welche Basisfunktionen, insbesondere zur Signalverarbeitung, realisieren, darstellbar sind und eine Zustandsbeschreibung des technischen Systems mittels solcher Verknüpfungselemente darstellbar ist; eine derartige Darstellung wird als dynamisches Diagramm bezeichnet. Im dynamischen Diagramm werden insbesondere die Zustandsgrößen eines technischen Systems propagiert, wobei aus den propagierten Zustandsgrößen auch deren zeitliche Ableitung ermittelbar ist. Eine derartige Darstellung eines technischen Systems in Gestalt eines dynamischen Diagramms kann nun gemäß der Erfindung erweitert werden, um gleichzeitig mit der Propagierung der Zustandsgrößen des technischen Systems mittels der Integratoren des dynamischen Diagramms auch die Elemente der Jakobimatrix zu propagieren, welche den partiellen Ableitungen jeder durch die Zustandsbeschreibung umfassten Zustandsfunktion nach den einzelnen Zustandsgrößen entsprechen.

Während bei bekannten numerischen Simulationsverfahren die Elemente der Jakobimatrix mittels mehrerer sequentieller Durchläufe des dynamischen Diagramms ermittelt werden, wobei jeweils nur eine der Zustandsgrößen variiert wird, werden beim erfindungsgemäßen Verfahren die Elemente der Jakobimatrix der Zustandsbeschreibung mittels eines einzigen Durchlaufs des dynamischen Diagramms ermittelt. Ferner werden beim erfindungsgemäßen Verfahren keine Differenzenquotienten zur Approximation der Jakobimatrix verwendet, so dass die erhaltenen Elemente der Jakobimatrix sehr genau sind.

Das erfindungsgemäße Verfahren zeichnet sich weiterhin dadurch aus, dass an den Verknüpfungselementen des dynamischen Diagramms nur Information bereit gestellt werden muss, die sich auf die ursprünglichen, nicht erweiterten, Signalein- und Signalausgänge des jeweiligen Verknüpfungselements selbst bezieht; es werden also bei jedem Verknüpfungselement keine globalen Informationen, beispielsweise die Information über die Dimension des Zustandsvektors - diese Information wird beispielsweise implizit automatisch geliefert in Form der erfindungsgemäß erweiterten Signale -, verwendet, so dass die Modularität der erfindungsgemäß erweiterten Verknüpfungselemente des dynamischen Diagramms erhalten bleibt und die Verknüpfungselemente beispielweise auch für die Simulation eines anderen technischen Systems mit anderen globalen Eigenschaften (wieder-)verwendet werden können.

Die Erfindung führt weiterhin zu einem Simulator zur Simulation eines technischen Systems in einer Anzahl von Simulationsschritten, wobei das technische System beschrieben ist durch eine Zustandsbeschreibung, welche Zustandsgrößen des technischen Systems umfasst, wobei die Zustandsbeschreibung als ein Verknüpfungselement umfassendes dynamisches Diagramm dargestellt ist, welches mindestens einen Summierer und/oder mindestens einen Multiplizierer und/oder mindestens einen Funktionsblock und/oder mindestens einen Integrator umfasst und wobei zur Lösung der Zustandsbeschreibung die Jakobimatrix der Zustandsbeschreibung verwendet ist, wobei die Anzahl der Signalein- und Signalausgänge jedes Verknüpfungselements für jeden Signalein- bzw. Signalausgang um eine Anzahl erweitert ist, welche der Anzahl der Zustandsgrößen des technischen Systems entspricht und wobei mittels der erweiterten Signalein- und Signalausgänge die partiellen Ableitungen von an den Signalein- und Signalausgängen anliegenden Signalen nach den einzelnen Zustandsgrößen erfasst sind, so dass die Gesamtheit der aktuellen Werte der an den erweiterten Signaleingängen aller Integratoren anliegenden Signale die Jakobimatrix umfassen, wobei den Integratoren jeweils eine Zustandsgröße zugeordnet ist.

Die im Zusammenhang mit dem erfindungsgemäßen Verfahren gemachten Ausführungen gelten in analoger Weise ebenfalls für einen erfindungsgemäßen Simulator.

Im Folgenden wird ein Ausführungsbeispiel der Erfindung näher dargestellt. Es zeigen:

FIG 1 bis FIG 5    Verknüpfungselemente eines dynamischen Diagramms mit erweiterten Signalein- und Signalausgängen zum Einsatz bei einem erfindungsgemäßen Verfahren,

FIG 6 bis FIG 7    eine Zustandsbeschreibung und ein dynamisches Diagramm eines technischen Systems nach dem Stand der Technik, und

FIG 8    einen erfindungsgemäßen Simulator, dargestellt mittels eines erfindungsgemäß erweiterten dynamischen Diagramms.

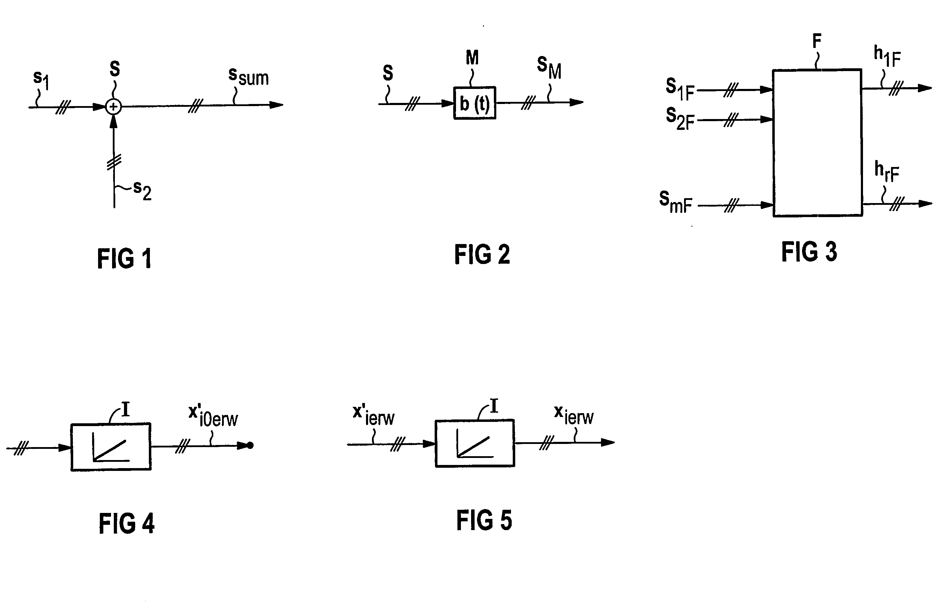

In FIG 1 bis FIG 5 sind Verknüpfungselemente mit Signalein- und Signalausgängen dargestellt, welche gemäß eines Teilaspekts der Erfindung erweitert sind. Die Verknüpfungselemente umfassen einen Summierer S, einen Multiplizierer M, einen Funktionsblock F und einen Integrator I.

Der Summierer S in FIG 1 bildet aus den anliegenden Eingangssignalen $s_1$ und $s_2$ ein Ausgangssignal $s_{sum}$, welches der Summe der angelegten Eingangssignale entspricht.

Der Multiplizierer M in FIG 2 multipliziert das erweiterte Eingangssignal s mit einem Faktor b(t) welcher zeitabhängig sein kann, und liefert das entsprechende erweiterte Ausgangssignal $s_M$.

Der Funktionsblock F in FIG 3 verknüpft die anliegenden Erweiterten Eingangssignale $s_{1F}, s_{2F},...,s_{mF}$ und liefert als erweiterte Ausgangssignale $h_{1F}, ..., h_{rF}$. Beim Funktionsblock F werden daher im Allgemeinen m jeweils erweiterte Eingangssignale abgebildet auf r jeweils erweiterte Ausgangssignale. Bei dieser Abbildung können die Eingangssignale beispielsweise mittels bekannter mathematischer Operationen verknüpft und ein Ergebnis gebildet werden.

FIG 4 zeigt einen Integrator I mit einem erweiterten Signalein- und einem Signalausgang, wobei der erweiterte Signalausgang $x_{i0erw}$ einen Initialisierungswert zur Durchführung des Schritts b) des erfindungsgemäßen Verfahrens führt.

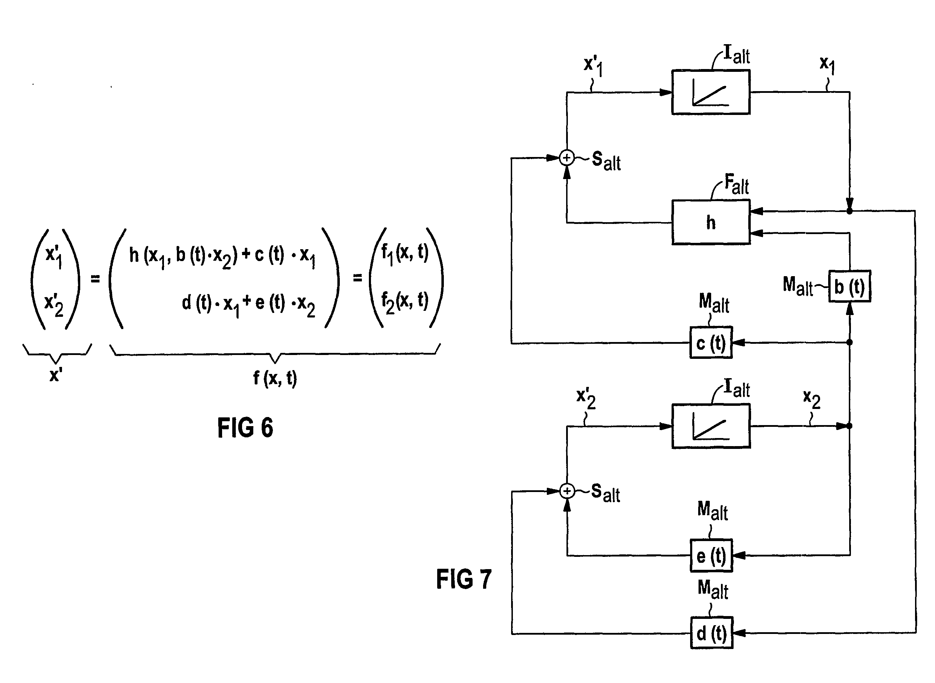

In FIG 5 ist der Integrator I dargestellt zur Durchführung des Schritts c) des erfindungsgemäßen Verfahrens, wobei als erweitertes Eingangssignal $x'_{ierw}$ anliegt, welches die zeitliche Ableitung einer Zustandsgröße und die partiellen Ableitungen der zeitlichen Ableitung der Zustandsgröße nach den einzelnen Zustandsgrößen umfasst. Das erweiterte Ausgangssignal $x_{ierw}$ des Integrators I umfasst die Werte einer Zustandsgröße und deren partielle Ableitungen nach den einzelnen Zustandsgrößen.

Die in FIG 1 bis FIG 5 auftretenden erweiterten Signalein- und Signalausgänge werden nun mittels einer mathematischen Formel näher beschrieben, wobei als Variable für die erweiterten Signalein- und Signalausgänge allgemein der Buchstabe v verwendet wird; die folgende Bildungsvorschrift kann mühelos auf alle der in FIG 1,2 und 3 auftretenden Signalein- und Signalausgänge übertragen werden.

$$V = \begin{pmatrix} v_0 \\ \dfrac{\delta v_0}{\delta x_1} \\ \dfrac{\delta v_0}{\delta x_2} \\ \vdots \\ \dfrac{\delta v_0}{\delta x_n} \end{pmatrix}$$

Diese Bildungsvorschrift für das erweiterte Signal v ist so zu verstehen, dass das ursprüngliche, nicht erweiterte, Signal $v_0$ zu einem Vektor v erweitert wird um die partiellen Ableitungen dieses ursprünglichen Signals $v_0$ nach den einzelnen Zustandsgrößen $x_1$, $x_2$,...,$x_n$. Dies bedeutet, dass sich die Dimension eines erweiterten Signalein- bzw. Signalausgangs um n erhöht, da die Signalein- und Signalausgänge der erfindungsgemäß erweiterten Verknüpfungselemente eines dynamischen Diagramms nun zusätzlich zum ursprünglich anliegenden Signalein- bzw. Signalausgangswert $v_0$ die partiellen Ableitungen dieses Signals nach den einzelnen Zustandsgrößen führen.

Die in den Figuren 1,2 und 3 dargestellten erweiterten Signalein- und Signalausgänge sind derart gebildet, was in der Zeichnung durch die dreifach gestrichenen Verbindungslinien angezeigt ist. Die Bildungsvorschrift für die Signale des Funktionsblocks F aus FIG 3 sei im Folgenden näher erläutert.

Die Signaleingänge $s_{1F}$ bis $s_{mF}$ weisen jeweils die Form des vorher genannten Vektors v auf; die Ausgangssignale $h_{1F}$ bis $h_{rF}$ sind ebenfalls gemäß derselben Bildungsvorschrift ausgestaltet, so dass beispielsweise die erste Komponente von $h_{1F}$ eine Funktionsvorschrift umfasst, welche die Abbildung der Eingangssignale $s_{1F}$ bis $s_{mF}$ auf den Funktionswert $h_{1F}$ beschreibt und die weiteren Komponenten von $h_{1F}$ die partiellen Ableitungen von $h_{1F}$ nach den einzelnen Zustandsgrößen umfassen. Dabei können die genannten partiellen Ableitungen von $h_{1F}$ nach den einzelnen Zustandsgrößen jeweils bestimmt werden als das Skalarprodukt eines ersten und eines zweiten Vektors, wobei der erste Vektor ein Zeilenvektor ist, welcher als Komponenten die partiellen Ableitungen von $h_{1F}$ nach den Eingangssignalen $s_{1F}$ bis $s_{mF}$ aufweist und der zweite Vektor ein Spaltenvektor ist, welcher als Komponenten die Ableitungen der Eingangssignale $s_{1F}$ bis $s_{mF}$ jeweils nach der aktuell betrachteten Zustandsgröße ist. Die weiteren Signale $h_{2F}$ bis $h_{rF}$ werden in analoger Weise zu $h_{1F}$ bestimmt.

Der Funktionsblock F stellt daher für einen Einsatz gemäß der Erfindung sowohl die genannte Funktionsvorschrift, als auch die genannten partiellen Ableitungen bereit.

Der als Initialisierungswert verwendete erweiterte Signalausgang der FIG 4 mit der Bezeichnung $x_{i0erw}$ wird ebenfalls entsprechend obiger Formel gebildet, wobei sich eine Vereinfachung ergibt, da dieser erweiterte Signalausgang eine Zustandsgröße umfasst. Geht man beispielsweise davon aus, dass die Zustandsbeschreibung des technischen Systems vier Zustandsgrößen umfasst, das entsprechende dynamische Diagramm also vier Integratoren aufweist und der Integrator I der FIG 4 der zweiten Zustandsgröße zugeordnet ist, so ergibt sich der entsprechende erweiterte Signalausgang $x_{i0erw}$ zu:

$$X_{i0erw} = \begin{pmatrix} x_{i0} \\ 0 \\ 1 \\ 0 \\ 0 \end{pmatrix}$$

In der ersten Zeile des erfindungsgemäß erweiterten Signalausgangs $x_{i0erw}$ ist ein festgelegter Anfangswerte $x_{i0}$ für die aktuell betrachtete zweite Zustandsgröße festgelegt und in den Zeilen 2 bis 5 sind die partiellen Ableitungen der aktuell betrachteten zweiten Zustandsgröße nach den einzelnen Zustandsgrößen enthalten. Da nach regelungstechnischer Konvention die Zustandsgrößen eines technischen Systems voneinander unabhängig sind, befinden sich Nullen an denjenigen Signalpositionen des beispielhaft gezeigten erweiterten Signalausgangs, welche den aktuell nicht betrachteten Zustandsgrößen entsprechen. Dementsprechend ist nur an derjenigen Signalposition des gezeigten erweiterten Signalausgangs eine 1 vorhanden, welche der aktuell betrachteten Zustandsgröße entspricht.

Diese Formel kann ebenfalls zur Bildung des erweiterten Signalausgangs $x_{ierw}$ der FIG 5 herangezogen werden nach Fortlassen des Index 0. FIG le zeigt nämlich den selben Integrator wie in Bild 4, lediglich während späterer Simulationsschritte, nachdem die zum Start der Simulation erforderlichen Initialisierung nach dem Schritt b) des erfindungsgemäßen Verfahrens abgeschlossen ist.

Im Übrigen benötigt jedes Simulationsverfahren, welches auf der Lösung von Differentialgleichungen beruht, zu Beginn des Verfahrens eine Anzahl an Initialisierungswerten, die der Ordnung des Differentialgleichungssystems entspricht. Derartige Initialisierungswerte werden auch als Anfangswerte bezeichnet.

Der in FIG 5 dargestellte erweiterte Signaleingang $x'_{ierw}$ hat bei vorliegenden n Zustandsgrößen folgende Gestalt:

$$ x'_{ierw} = \begin{pmatrix} x'_i \\ \dfrac{\delta x'_i}{\delta x_1} \\ \dfrac{\delta x'_i}{\delta x_2} \\ \vdots \\ \dfrac{\delta x'_i}{\delta x_n} \end{pmatrix} $$

Es handelt sich bei diesem erweiterten Signal also um den erweiterten Signaleingang eines der Integratoren I, wobei die zeitliche Ableitung einer Zustandsgröße und die partiellen Ableitungen der zeitlichen Ableitung dieser Zustandsgröße nach den einzelnen Zustandsgrößen erfasst sind.

In FIG 6 und 7 sind die Zustandsbeschreibungen f (x, t) und ein entsprechendes dynamisches Diagramm eines technischen Systems beispielhaft dargestellt.

Aus der genannten Zustandsbeschreibung der FIG 6 ist unmittelbar ersichtlich, dass das beispielhaft betrachtete technische System zwei unabhängige Zustandsgrößen $x_1$ und $x_2$ umfasst.

Die Zustandsbeschreibung umfasst zwei Differenzialgleichungen, jeweils von erster Ordnung, wodurch die zeitliche Ableitung der Zustandsgrößen in Abhängigkeit von den Zustandsgrößen beschrieben ist.

In den Zustandsbeschreibungen technischer Systeme tritt häufig mehrfach eine Hilfsfunktion auf, welche mit im Allgemeinen unterschiedlichen Aufrufparametern aufgerufen wird, wobei jedoch die durch die Hilfsfunktion repräsentierte Abbildungsvorschrift unverändert bleibt. Ein Beispiel für eine derartige Hilfsfunktion ist eine Wasser-Dampf-Tafel, welche beispielsweise bei der Simulation und/oder der Auslegung eines Kraftwerks mehrfach auszuwerten ist, indem z.B. aus aktuellen Aufrufparametern Druck, Enthalpie, Temperatur und Volumen eines Wasserstroms die korrespondierende Dampfmenge berechnet wird.

Im einfachen Beispiel der FIG 6 und 7 ist eine Hilfsfunktion dargestellt, welche einmal pro Simulationsschritt ausgewertet wird, es ist jedoch möglich und bei technischen Systemen, insbesondere bei Kraftwerksanlagen, charakteristisch, dass deren Zustandsbeschreibung eine Hilfsfunktion mehrfach umfasst, diese also während eines Simulationsschritts mehrfach ausgewertet wird.

FIG 7 zeigt ein der Zustandsbeschreibung der FIG 6 entsprechendes dynamisches Diagramm, nach dem Stand der Technik, wobei jede Verbindungslinie nur ein Signal führt.

Die zeitlichen Ableitungen der Zustandsgrößen $x'_1$ und $x'_2$ liegen an den Eingängen der Integratoren $I_{alt}$ an; die Ausgänge der Integratoren führen dementsprechend die Zustandsgrößen $x_1$ und $x_2$. Entsprechend den durch die Zustandsbeschreibung der FIG 6 formulierten Verknüpfungsvorschriften sind in der FIG 7 im dynamischen Diagramm Verknüpfungselemente $S_{alt}$, $M_{alt}$, $F_{alt}$ und die genannten Integratoren $I_{alt}$ vorgesehen; der Index "alt" bezieht sich dabei auf bekannte Verknüpfungselemente nach dem Stand der Technik.

Das Verknüpfungselemente $S_{alt}$ entspricht einem Summierer, welcher die an ihm anliegenden Eingangssignale addiert und ein entsprechendes Summensignal ausgibt.

Das Verknüpfungselement $M_{alt}$ repräsentiert einen Multiplizierer, welcher ein an ihm anliegendes Eingangssignal mit einem im Allgemeinen zeitabhängigen Faktor multipliziert und ein entsprechendes Ausgangssignal abgibt; im Beispiel der FIG 7 sind bei den Verknüpfungselementen $M_{alt}$ Multiplikationen der jeweils anliegenden Eingangssignale mit zeitabhängigen Faktoren b (t), c (t), d (t) bzw. e (t) vorgesehen.

Das Verknüpfungselement $F_{alt}$ realisiert die in der FIG 6 beinhalteten Hilfsfunktion h, wobei aus der als Einganssignal anliegenden Zustandsgröße $x_1$ und aus der mit dem Faktor b (t) multiplizierten Zustandsgröße $x_2$ als ebenfalls anliegendem Eingangssignal ein Ausgangswert berechnet wird, beispielsweise bei einer Kraftwerksanlage eine erzeugte Dampfmenge, wenn eine bestimmte Menge an Wasser unter einem bestimmten Druck und einer bestimmten Temperatur und einer bestimmten Enthalpie vorliegt.

Die in FIG 6 und 7 nebeneinander dargestellten Repräsentationen der Zustandsbeschreibung eines technischen Systems sind gleichwertig, wobei die Darstellung der FIG 7 als dynamisches Diagramm technikorientiert ist und beispielsweise leicht in einer Datenverarbeitungsanlage implementiert werden kann. Sehr viele bekannte Simulatoren basieren auf dynamischen Diagrammen entsprechend der FIG 7.

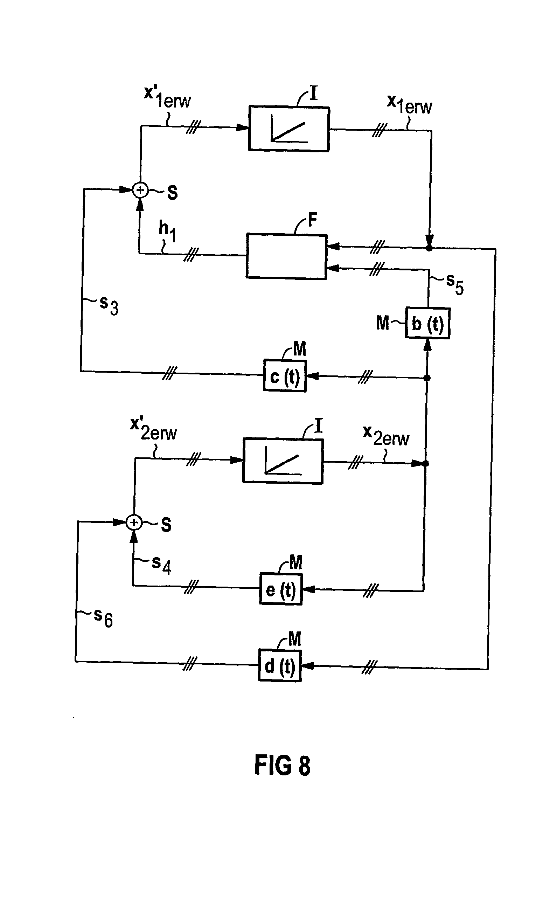

In FIG 8 ist ein dynamisches Diagramm dargestellt, mit welchem ein erfindungsgemäßes Verfahren durchführbar ist. Des Weiteren kann ein der FIG 8 entsprechendes dynamisches Diagramm in einer Datenverarbeitungsanlage implementiert sein, so dass ein erfindungsgemäßer Simulator realisiert ist.

Um die erfindungsgemäßen Erweiterungen eines bekannten dynamischen Diagramms, beispielsweise wie in der FIG 7 dargestellt, zu verdeutlichen, wurde in der FIG 8 das dynamische Diagramm der FIG 7 zugrunde gelegt und erfindungsgemäß erweitert. Eine Beschränkung des erfindungsgemäßen Verfahrens oder des erfindungsgemäßen Simulators auf das in der FIG 7 dargestellte dynamische Diagramm ist nicht beabsichtigt; vielmehr sind dynamische Diagramme jeglicher Ausprägung, Struktur und Komplexität gemäß der Erfindung erweiterbar.

Ein wesentlicher Unterschied des erfindungsgemäß erweiterten dynamischen Diagramms der FIG 8 im Vergleich zum bekannten dynamischen Diagramm der FIG 7 besteht darin, dass die Leitungen der FIG 8, mit welchen die Verknüpfungselemente verbunden sind, nun jeweils nicht nur ein Signal führen, sondern parallel dazu die Ableitungen des jeweils geführten Signals nach den einzelnen Zustandsgrößen, so dass im Falle des Vorliegens von n-Zustandsgrößen nun jede Leitung n + 1 Signale führt. Die Verknüpfungselemente S, M, F und I der FIG 8 müssen folglich Vektoren von Signalen verarbeiten. Die Ein- und Ausgangssignale $s_3$, $s_4$, $s_5$, $s_6$, $x'_{1erw}$, $x_{1erw}$, $h_1$, $x'_{2erw}$, $x_{2erw}$ sind entsprechend den Formeln gebildet, wie sie im Zusammenhang mit FIG 1 bis 5 angegeben wurden. Somit ergibt sich, dass mittels FIG 8 ein erfindungsgemäßes Verfahren zur Simulation eines technischen Systems in einer Anzahl von Simulationsschritten beschrieben ist, wobei in einem ersten Simulationsschritt die erweiterten Signalausgänge $x_{1erw}$ und $x_{2erw}$ der Integratoren I jeweils initialisiert werden, indem bei jedem Integrator I, welcher jeweils zur Bestimmung einer Zustandsgröße $x_1$, $x_2$ vorgesehen und dieser Zustandsgröße zugeordnet ist, im erweiterten Signalausgang $x_{1erw}$, $x_{2erw}$ des jeweiligen Integrators an einer Signalposition, welche der den Integrator zugeordneten Zustandsgröße entspricht, ein Initialisierungswert vorgegeben wird; ein erfindungsgemäßer Simulator kann mittels des beispielhaft gezeigten dynamischen Diagramms realisiert sein, beispielsweise programmtechnisch in einer Datenverarbeitungsanlage.

Ein nächster Simulationsschritt umfasst die Berechnung eines aktuellen Werts für alle im dynamischen Diagramm der FIG 8 vorkommenden erweiterten Signale; wobei von einem jeweils aktuell vorliegenden Wert der Ausgänge der Integratoren I ausgegangen wird - im Falle des ersten Simulationsschritts, wie oben erwähnt, von den vorgegebenen Initialisierungswerten -, also von aktuellen Werten für die erweiterten Zustandsgrößen $X_{1erw}$ und $X_{2erw}$, und diese Signale dann entsprechend der in der Figur dargestellten Leitungen an die Verknüpfungselemente verteilt werden, bis die aktuellen Werte für die zeitliche Ableitung der erweiterten Zustandsgrößen $x'_{1erw}$ und $x'_{2erw}$ an den Integratoreingängen vorliegen.

Der nächste und folgende Simulationsschritte umfassen die Integration der zeitlichen Ableitungen der erweiterten Zustandsgrößen $x'_{1erw}$ und $x'_{2erw}$ durch die Integratoren I, bis weitere aktuelle Werte für die erweiterten Zustandsgrößen an den Integratorausgängen vorliegen, mit welchen dann das dynamische Diagramm für den jeweils folgenden Simulationsschritt wieder durchlaufen wird.

Beim erfindungsgemäßen Verfahren umfassen bei jedem Simulationsschritt die aktuellen Werte der zeitlichen Ableitungen der erweiterten Zustandsgrößen $x'_{1erw}$ und $x'_{2erw}$, also die aktuellen Werte der Signaleingänge der Integratoren I, die Jakobimatrix, wobei die aktuellen Werte des Signaleingangs jedes Integrators I jeweils eine Zeile der Jakobimatrix umfassen.

Am erweiterten Signaleingang des in der FIG 8 oben gezeichneten Integrators I liegt gemäß der Erfindung folgendes Signal an:

$$X'_{1erw} = \begin{pmatrix} x'_1 \\ \dfrac{\delta x'_1}{\delta x_1} \\ \dfrac{\delta x'_1}{\delta x_2} \end{pmatrix}^T = \begin{pmatrix} h(x_1, b(t) \cdot x_2) + c(t) \cdot x_2 \\ \dfrac{\delta f_1(x,t)}{\delta x_1} \\ \dfrac{\delta f_1(x,t)}{\delta x_2} \end{pmatrix}^T \quad \begin{matrix} \leftarrow f_1(x,t) \\[1em] \left\{ \begin{matrix} \textit{erste Zeile der} \\ \textit{Jakobimatrix} \end{matrix} \right. \end{matrix}$$

Es ist unmittelbar ersichtlich, dass oben stehendes Signal die erste Zeile der in Schritt c des erfindungsgemäßen Verfahrens zu bestimmende Jakobimatrix umfasst.

Am erweiterten Signaleingang des in der FIG 8 unten dargestellten Integrators I liegt ein Signal an, welches die zweite Zeile der im Schritt c des erfindungsgemäßen Verfahrens zu bestimmenden Jakobimatrix umfasst:

$$X'_{2erw} = \begin{pmatrix} x'_2 \\ \dfrac{\delta x'_2}{\delta x_1} \\ \dfrac{\delta x'_2}{\delta x_2} \end{pmatrix}^T = \begin{pmatrix} d(t) \cdot x_1 + e(t) \cdot x_2 \\ \dfrac{\delta f_2(x,t)}{\delta x_1} \\ \dfrac{\delta f_2(x,t)}{\delta x_2} \end{pmatrix}^T \quad \begin{matrix} \leftarrow f_2(x,t) \\[1em] \left\{ \begin{matrix} \textit{zweite Zeile der} \\ \textit{Jakobimatrix} \end{matrix} \right. \end{matrix}$$

Da die beiden genannten Zeilen der Jakobimatrix während eines Simulationsschritts beim Durchlaufen des dynamischen Diagramms parallel ermittelt werden, wird folglich die Jakobimatrix der Zustandsbeschreibung bei jedem Simulationsschritt in ihrer Gesamtheit und in einem Durchlauf des dynamischen Diagramms ermittelt, ohne dass dabei wie im Stand der Technik vorgesehen, Differenzenquotienten in einer Anzahl von Simulationsunterschritten jedes Simulationsschritts gebildet und ausgewertet werden müssen.

Selbstverständlich ist das erfindungsgemäße Verfahren und der erfindungsgemäße Simulator bei technischen Systemen jeglicher Ordnung einsetzbar; die der Einfachheit halber vorgenommenen Beschränkungen in FIG 6 bis 8 auf die Ordnung 2 dient nur zur Erläuterung. Dies bedeutet, dass auch hochdimensionale technische Systeme mittels des erfindungsgemäßen Verfahrens bzw. Simulators simulierbar sind, wobei die Jakobimatrix deren jeweiliger Zustandsbeschreibung in jedem Simulationsschritt in einem Zug ermittelt ist.

Zusammenfassend lässt sich feststellen, dass bei einem erfindungsgemäßen Verfahren und einem erfindungsgemäßen Simulator zusätzlich zu den Zustandsgrößen auch die genannten Ableitungsinformationen propagiert werden. Demgemäß führt jede Signalleitung des dynamischen Diagramms statt eines skalaren Signals nun einen (n+1)-dimensionalen Vektor, wobei n der Anzahl der Zustandsgrößen entspricht. Die Vorschrift, wie der genannte Vektor an den einzelnen Verknüpfungselementen zu transformieren ist, leitet sich aus den Differentiationsregeln der Analysis ab (Summierer: Summenregel; Multiplizierer: Produktregel; Funktionsblock: Kettenregel). Wichtig ist die technische Erkenntnis, dass die genannten Transformationen in den Verknüpfungselementen jeweils lokal erfolgen kann, also dass ein Verknüpfungselement außer dem jeweiligen erweiterten Signaleingangsvektor und einer im Verknüpfungselement realisierten Transformationsvorschrift (gemäß der genannten Differentiationsregeln) keine weiteren, nicht lokal vorhandenen Informationen benötigt. Daraus ergibt sich u.a. der große technische Vorteil, wonach erfindungsgemäß erweiterte Verknüpfungselemente beispielsweise als Bausteine in einer Softwarebibliothek abgelegt und zur Simulation von anderen technischen Systemen wieder verwendet werden können, da von den Verknüpfungselementen keine globale Informationen des technischen Systems umfasst werden.

## Patentansprüche

1. Verfahren zur Simulation eines technischen Systems in einer Anzahl von Simulationsschritten, wobei das technische System beschrieben ist durch eine Zustandsbeschreibung, welche Zustandsgrößen ($x_1$, $x_2$) des technischen Systems umfasst, wobei die Zustandsbeschreibung als ein Verknüpfungselemente (S, M, F, I) umfassendes dynamisches Diagramm dargestellt wird, welches mindestens einen Summierer (S) und/oder mindestens einen Multiplizierer (M) und/oder mindestens einen Funktionsblock (F) und/oder mindestens einen Integrator (I) umfasst und wobei die Verknüpfungselemente jeweils mindestens einen zugehörigen Signalein- ($s_1$, $s_2$, s, $s_{1F}$, $x'_{ierw}$) und Signalausgang ($s_{sum}$, $s_M$, $h_{1F}$... $h_{rF}$) umfassen, und wobei zur Lösung der Zustandsbeschreibung die Jakobimatrix der Zustandsbeschreibung verwendet wird,

**gekennzeichnet durch** folgende Schritte:

a) die Anzahl der Signalein- ($s_1$, $s_2$, s, $s_{1F}$, $x'_{ierw}$) und Signalausgänge ($s_{sum}$, $s_M$, $h_{1F}$...$h_{rF}$) jedes Verknüpfungselements wird für jeden Signalein-($s_1$, $s_2$, s, $s_{1F}$, $x'_{ierw}$) bzw. Signalausgang ($s_{sum}$, $s_M$, $h_{1F}$...$h_{rF}$) um eine Anzahl erweitert, welche der Anzahl der Zustandsgrößen ($x_1$, $x_2$) des technischen Systems entspricht, so dass mittels der erweiterten Signalein- ($s_1$, $s_2$, s, $s_{1F}$, $x'_{ierw}$) und Signalausgänge ($s_{sum}$, $s_M$, $h_{1F}$...$h_{rF}$) die partiellen Ableitungen von an den Signalein- ($s_1$, $s_2$, s, $s_{1F}$, $x'_{ierw}$) und Signalausgängen ($s_{sum}$, $s_M$, $h_{1F}$...$h_{rF}$) anliegenden Signalen nach den einzelnen Zustandsgrößen ($x_1$, $x_2$) zusätzlich erfassbar sind,

b) in einem ersten Simulationsschritt werden die erweiterten Signalausgänge ($x_{ierw}$) der vorhandenen Integratoren (I) jeweils initialisiert, indem bei jedem Integrator (I), welcher jeweils zur Bestimmung einer Zustandsgröße ($x_1$, $x_2$) vorgesehen und dieser Zustandsgröße zugeordnet ist, in dessen erweiterten Signalausgängen ($x_{ierw}$) an einer Signalposition, welche der dem Integrator (I) zugeordneten Zustandsgröße entspricht, ein Initialisierungswert ($x_{i0erw}$) vorgegeben wird, und

c) in folgenden Simulationsschritten wird jeweils die Jakobimatrix **durch** die an den erweiterten Signaleingängen der Integratoren anliegenden Signale bestimmt, wobei die aktuellen Werte der erweiterten Signaleingänge ($x'_{ierw}$) eines Integrators (I) die aktuellen Werten einer Zeile der Jakobimatrix umfassen, so dass die Gesamtheit der aktuellen Werte der an den erweiterten Signaleingängen ($x'_{ierw}$) aller Integratoren (I) anliegenden Signalen die Jakobimatrix umfasst.

2. Simulator zur Simulation eines technischen Systems in einer Anzahl von Simulationsschritten, wobei das technische System beschrieben ist durch eine Zustandsbeschreibung, welche Zustandsgrößen ($x_1$, $x_2$) des technischen Systems umfasst, wobei die Zustandsbeschreibung als ein Verknüpfungselemente (S, M, F, I) umfassendes dynamisches Diagramm dargestellt ist, welche mindestens einen Summierer (S) und/oder mindestens einen Multiplizierer (M) und/oder mindestens einen Funktionsblock (F) und/oder mindestens einen Integrator (I) umfasst und wobei zur Lösung der Zustandsbeschreibung die Jakobimatrix der Zustandsbeschreibung verwendet ist,

**dadurch gekennzeichnet, dass** die Anzahl der Signalein- ($s_1$, $s_2$, s, $s_{1F}$, $x'_{ierw}$) und Signalausgänge ($s_{sum}$, $s_M$, $h_{1F}$...$h_{rF}$) jedes Verknüpfungselements für jeden Signalein- ($s_1$, $s_2$, s, $s_{1F}$, $x'_{ierw}$) bzw. Signalausgang ($s_{sum}$, $s_M$, $h_{1F}$...$h_{rF}$) um eine Anzahl erweitert ist, welcher der Anzahl der Zustandsgrößen ($x_1$, $x_2$) des technischen Systems entspricht und dass mittels der erweiterten Signalein-($s_1$, $s_2$, s, $s_{1F}$, $x'_{ierw}$) und Signalausgänge ($s_{sum}$, $s_M$, $h_{1F}$...$h_{rF}$) die partiellen Ableitungen von an den Signalein- ($s_1$, $s_2$, s, $s_{1F}$, $x'_{ierw}$) und Signalausgängen ($s_{sum}$, $s_M$, $h_{1F}$...$h_{rF}$) anliegenden Signalen nach den einzelnen Zustandsgrößen ($x_1$, $x_2$) erfasst sind, so dass die Gesamtheit der aktuellen Werte der an den erweiterten Signaleingängen ($x'_{ierw}$) aller Integratoren (I) anliegenden Signale die Jakobimatrix umfasst, wobei den Integratoren (I) jeweils eine Zustandsgröße zugeordnet ist.

**Claims**

1. Method for the simulation of a technical system in a number of simulation steps, the technical system being described by a state description which comprises state variables ($x_1$, $x_2$) of the technical system, the state description being represented as a dynamic diagram comprising combinational elements (S, M, F, I), which comprise at least one summer (S) and/or at least one multiplier (M) and/or at least one functional block (F) and/or at least one integrator (I), and the combinational elements respectively comprising at least one associated signal input ($s_1$, $s_2$, s, $s_{1F}$, $x'_{iext}$) and signal output ($s_{sum}$, $s_M$, $h_{1F}$... $h_{rF}$), and the Jacobi matrix of the state description being used for solving the state description,

**characterized by** the following steps:

a) the number of signal inputs ($s_1$, $s_2$, s, $s_{1F}$, $x'_{iext}$) and signal outputs ($s_{sum}$, $s_M$, $h_{1F}$... $h_{rF}$) of each combinational element is extended for each signal input ($s_1$, $s_2$, s, $s_{1F}$, $x'_{iext}$) and signal output ($s_{sum}$, $s_M$, $h_{1F}$... $h_{rF}$) by a number which corresponds to the number of state variables ($x_1$, $x_2$) of the technical system, so that, by means of the extended signal inputs ($s_1$, $s_2$, s, $s_{1F}$, $x'_{iext}$) and signal outputs ($s_{sum}$, $s_M$, $h_{1F}$... $h_{rF}$), the partial derivatives of signals present at the signal inputs ($s_1$, $s_2$, s, $s_{1F}$, $x'_{iext}$) and signal outputs ($s_{sum}$, $s_M$, $h_{1F}$... $h_{rF}$) can be additionally registered on the basis of the individual state variables ($x_1$, $x_2$),

b) in a first simulation step, the extended signal outputs ($x_{iext}$) of the integrators (I) present are respectively initialized, in that for each integrator (I), which is respectively provided for determining a state variable ($x_1$, $x_2$) and is assigned to this state variable, an initialization value ($x_{i0ext}$) is prescribed in the extended signal outputs ($x_{iext}$) of said integrator at a signal position which corresponds to the state variable assigned to the integrator (I), and

c) in following simulation steps, the Jacobi matrix is respectively determined by the signals present at the extended signal inputs of the integrators, the current values of the extended signal inputs ($x'_{iext}$) of an integrator (I) corresponding to the current values of a row of the Jacobi matrix, so that the entirety of the current values of the signals present at the extended signal inputs ($x'_{iext}$) of all the integrators (I) comprises the Jacobi matrix.

**2.** Simulator for the simulation of a technical system in a number of simulation steps, the technical system being described by a state description which comprises state variables ($x_1$, $x_2$) of the technical system, the state description being represented as a dynamic diagram comprising combinational elements (S, M, F, I), which comprises at least one summer (S) and/or at least one multiplier (M) and/or at least one functional block (F) and/or at least one integrator (I), and the Jacobi matrix of the state description being used for solving the state description,
**characterized in that** the number of signal inputs ($s_1$, $s_2$, s, $s_{1F}$, $x'_{iext}$) and signal outputs ($s_{sum}$, $s_M$, $h_{1F}$... $h_{rF}$) of each combinational element is extended for each signal input ($s_1$, $s_2$, s, $s_{1F}$, $x'_{iext}$) and signal output ($s_{sum}$, $s_M$, $h_{1F}$... $h_{rF}$) by a number which corresponds to the number of state variables ($x_1$, $x_2$) of the technical system and **in that**, by means of the extended signal inputs ($s_1$, $s_2$, s, $s_{1F}$, $x'_{iext}$) and signal outputs ($s_{sum}$, $s_M$, $h_{1F}$... $h_{rF}$), the partial derivatives of signals present at the signal inputs ($s_1$, $s_2$, s, $s_{1F}$, $x'_{iext}$) and signal outputs ($s_{sum}$, $s_M$, $h_{1F}$... $h_{rF}$) are registered on the basis of the individual state variables ($x_1$, $x_2$), so that the entirety of the current values of the signals present at the extended signal inputs ($x'_{iext}$) of all the integrators (I) comprises the Jacobi matrix, the integrators (I) being respectively assigned a state variable.

**Revendications**

1. Procédé pour la simulation d'un système technique en un certain nombre d'étapes de simulation, le système technique étant décrit par une description d'états qui comprend des grandeurs d'état ($x_1$, $x_2$) du système technique, la description d'états étant représentée comme un diagramme dynamique qui comprend des éléments de combinaison (S, M, F, I) et qui comprend au moins un additionneur (S) et/ou au moins un multiplicateur (M) et/ou au moins un bloc fonctionnel (F) et/ou au moins un intégrateur (I), les éléments de combinaison comprenant à chaque fois au moins une entrée de signal associée ($s_1$, $s_2$, s, $s_{1F}$, $x'_{ierw}$) et une sortie de signal associée ($s_{sum}$, $s_M$, $h_{1F}$ à $h_{rF}$) et la matrice de Jacobi de la description d'états étant utilisée pour résoudre la description d'états,
**caractérisé par** les étapes suivantes :

a) le nombre des entrées de signal ($s_1$, $s_2$, s, $s_{1F}$, $x'_{ierw}$) et des sorties de signal ($s_{sum}$, $s_M$, $h_{1F}$ à $h_{rF}$) de chaque élément de combinaison étant complété pour chaque entrée de signal ($s_1$, $s_2$, s, $s_{1F}$, $x'_{ierw}$) ou sortie de signal ($s_{sum}$, $s_M$, $h_{1F}$ à $h_{rF}$) par un nombre qui correspond au nombre des grandeurs d'état ($x_1$, $x_2$) du système technique de telle sorte que, au moyen des entrées de signal ($s_1$, $s_2$, s, $s_{1F}$, $x'_{ierw}$) et sorties de signal ($s_{sum}$, $s_M$, $h_{1F}$ à $h_{rF}$) complétées, les dérivées partielles de signaux appliqués aux entrées de signal ($s_1$, $s_2$, s, $s_{1F}$, $x'_{ierw}$) et sorties de signal ($s_{sum}$, $s_M$, $h_{1F}$ à $h_{rF}$) par rapport aux différentes grandeurs d'état ($x_1$, $x_2$) peuvent être déterminées en plus,
b) dans une première étape de simulation, les sorties de signal complétées ($x_{ierw}$) des intégrateurs présents (I) sont initialisées par le fait que, pour chaque intégrateur (I) qui est prévu respectivement pour la détermination d'une grandeur d'état ($x_1$, $x_2$) et qui est associé à cette grandeur d'état, une valeur d'initialisation ($x_{i0erw}$) est prescrite dans ses sorties de signal complétées ($x_{ierw}$) à une position de signal qui correspond à la grandeur d'état associée à l'intégrateur (I), et
c) dans des étapes de simulation suivantes, la matrice de Jacobi est déterminée à chaque fois pour les signaux appliqués aux entrées de signal complétées des intégrateurs, les valeurs actuelles des entrées de signal complétées ($x'_{ierw}$) d'un intégrateur (I) comprenant les valeurs actuelles d'une ligne de la matrice de Jacobi de telle sorte que la totalité des valeurs actuelles des signaux appliqués aux entrées de signal complétées ($x'_{ierw}$) de tous les intégrateurs (I) comprend la matrice de Jacobi.

2. Simulateur pour la simulation d'un système technique en un certain nombre d'étapes de simulation, le système technique étant décrit par une description d'états qui comprend des grandeurs d'état ($x_1$, $x_2$) du système technique, la description d'états étant représentée comme un diagramme dynamique qui comprend des éléments de combinaison (S, M, F, I) et qui comprend au moins un additionneur (S) et/ou au moins un multiplicateur (M) et/ou au moins un bloc fonctionnel (F) et/ou au moins un intégrateur (I) et la matrice de Jacobi de la description d'états étant utilisée pour résoudre la description d'états,

**caractérisé par le fait que** le nombre des entrées de signal ($s_1$, $s_2$, s, $s_{1F}$, $x'_{ierw}$) et des sorties de signal ($s_{sum}$, $s_M$, $h_{1F}$ à $h_{rF}$) de chaque élément de combinaison est complété pour chaque entrée de signal ($s_1$, $s_2$, s, $s_{1F}$, $x'_{ierw}$) ou sortie de signal ($s_{sum}$, $s_M$, $h_{1F}$ à $h_{rF}$) par un nombre qui correspond au nombre des grandeurs d'état ($x_1$, $x_2$) du système technique et que, au moyen des entrées de signal ($s_1$, $s_2$, s, $s_{1F}$, $x'_{ierw}$) et sorties de signal ($s_{sum}$, $s_M$, $h_{1F}$ à $h_{rF}$) complétées, les dérivées partielles de signaux appliqués aux entrées de signal ($s_1$, $s_2$, s, $s_{1F}$, $x'_{ierw}$) et sorties de signal ($s_{sum}$, $s_M$, $h_{1F}$ à $h_{rF}$) par rapport aux différentes grandeurs d'état ($x_1$, $x_2$) sont déterminées, de telle sorte que la totalité des valeurs actuelles des signaux appliqués aux entrées de signal complétées ($x'_{ierw}$) de tous les intégrateurs (I) comprend la matrice de Jacobi, une grandeur d'état étant associée à chaque fois aux intégrateurs (I).

EP 1 483 634 B1

**FIG 1**

$s_1$   S   $s_{sum}$

$s_2$

**FIG 2**

S   M   $s_M$

b (t)

**FIG 3**

$s_{1F}$   F   $h_{1F}$

$s_{2F}$

$s_{mF}$   $h_{rF}$

**FIG 4**

I   $x'_{i0erw}$

**FIG 5**

$x'_{ierw}$   I   $x_{ierw}$

$$\underbrace{\begin{pmatrix} x'_1 \\ x'_2 \end{pmatrix}}_{x'} = \underbrace{\begin{pmatrix} h(x_1, b(t) \cdot x_2) + c(t) \cdot x_1 \\ d(t) \cdot x_1 + e(t) \cdot x_2 \end{pmatrix}}_{f(x,t)} = \begin{pmatrix} f_1(x, t) \\ f_2(x, t) \end{pmatrix}$$

**FIG 6**

**FIG 7**

EP 1 483 634 B1

**FIG 8**